# EUROPÄISCHE PATENTSCHRIFT

(11) **EP 2 831 441 B1**
(45) Veröffentlichungstag und Bekanntmachung des Hinweises auf die Patenterteilung: **04.09.2019**
(21) Anmeldenummer: 13709862.0
(22) Anmeldetag: 11.03.2013
(51) Int. Cl.: F16D 25/08

(54) **NEHMERZYLINDER**
SLAVE CYLINDER
CYLINDRE RÉCEPTEUR

(30) Priorität: 28.03.2012 DE 102012204952
(43) Veröffentlichungstag der Anmeldung: 04.02.2015
(73) Patentinhaber: Schaeffler Technologies AG & Co. KG, 91074 Herzogenaurach (DE)
(72) Erfinder: CHEVET, Alexandre, F-45160 Olivet (FR); LAKSHMINARAYANAN, Saravanan, 76437 Rastatt (DE); CHEVET, Alexandre, F-45160 Olivet (FR)
(86) Internationale Anmeldenummer: PCT/EP2013/054858
(87) Internationale Veröffentlichungsnummer: WO 2013/143832

(56) Entgegenhaltungen:
- DE-A1-102009 042 822
- DE-A1-102010 021 788
- FR-A3- 2 909 148

## Beschreibung

Die Erfindung betrifft einen Nehmerzylinder für Kupplungs- oder Bremssysteme eines Kraftfahrzeuges nach dem Oberbegriff des ersten Patentanspruchs.

Gattungsgemäße konzentrische Nehmerzylinder ("concentric slave cylinder" - CSC) oder Zentralausrücker werden bei hydraulischen Kupplungssystemen in der Funktionskette zwischen Kupplungspedal und Kupplung eingesetzt. Sie weisen ein als Ringzylinder ausgebildetes Gehäuse auf, das um eine Kupplungs- bzw. Getriebeeingangswelle angeordnet ist. In dem Gehäuse ist ein in axialer Richtung beweglicher Ringkolben geführt, der ein sich an einer Kupplung abstützendes Ausrücklager trägt. Ein beispielsweise als Schraubendruckfeder ausgebildeter Energiespeicher umschließt den Kolben. Bei hydraulischer Beaufschlagung des Kolbens über eine Druckleitung wirkt der vorgespannte Energiespeicher auf das Ausrücklager, wodurch die Kupplung betätigt wird. Zum Schutz vor Verschmutzung bzw. als Abdichtung des Ringkolbens werden elastische Schutzbalge eingesetzt, die die Vorspannfeder umhüllen. Diese Schutz- oder Faltenbalge stehen üblicherweise mit ihrem einen Ende mit dem Gehäuse und mit ihrem anderen Ende mit dem Ausrücklager in Verbindung und verhindern bei der Bewegung des Kolbens ein Eintragen von Schmutz aus der Umgebung. Dabei sind unterschiedliche Befestigungen bzw. Anordnungen des Schutzbalges bekannt.

So werden in DE 10 2005 000619 T5 und in DE 10 2007 023 275 A1 Zentralausrücker offenbart, bei denen jeweils ein Faltenbalg vorgesehen ist, der sich mit seinem einen Ende am Gehäuse und mit seinem anderen Ende am Ausrücklager abstützt. Dabei sind sowohl am Gehäuse als auch am Ausrücklager stirnseitige Aufnahmen vorgesehen, in die der in axialer Richtung verlängerbare Faltenbalg einsetzbar ist. Diese stirnseitigen Aufnahmen weisen eine radiale und eine axiale Anlagefläche für das wulstartig ausgebildete Ende des Faltenbalges auf und dienen lediglich dessen Führung und Zentrierung. Da keine Befestigung der Enden des Schutzbalges vorgesehen ist, kann es aber passieren, dass dieser aus den Aufnahmen herausrutscht bzw. dass der elastische Schutzbalg auf Grund von Wärmeeinwirkung schon nach kurzer Einsatzzeit nicht mehr seine ursprüngliche Form (maximale Auszugsposition) einnimmt und somit keinen optimalen Schmutzschutz gewährleisten kann.

Insbesondere bei Anordnungen, die eine Befestigung des einen Endes des Schutzbalges am Gehäuse vorsehen, während das ausrücklagerseitige Ende nur eine Führung und Zentrierung erfährt, kommt es zur Ausbildung eines Spaltes zwischen Schutzbalg und Ausrücklager, durch den Schmutzpartikel an Energiespeicher und Ringkolben gelangen können.

Bei der in DE 100 80 438 C1 gezeigten Ausführung eines Nehmerzylinders ist das ausrücklagerseitige Ende des Schutzbalges mit einem sich am Lagerinnenring des Ausrücklagers abstützenden Abschirmring verbunden. Dabei weist der Abschirmring am Außenumfang eine durch eine Querschnittsverengung gebildete radial umlaufende Nut auf, in die das wulstförmige Ende des Faltenbalges eingreift. Das Querschnittsprofil der Nut ist U-förmig ausgebildet und zeigt eine axial gerichtete sowie zwei zueinander parallel verlaufende radiale Anlageflächen für das komplementär ausgebildete Ende des Faltenbalges, der in Umfangsrichtung in dieser Nut frei beweglich angeordnet ist. Bei dieser Anbringung des Faltenbalges ist zwar das Risiko des Ausfalls seiner Schutzfunktion geringer, aber die Gefahr des Herausrutschens des ausrücklagerseitigen Endes des Faltenbalges aus der nach radial außen gerichteten Nut besteht auch hier. Vor allem weist diese bekannte Lösung aber einen erhöhten Montageaufwand auf, da ein zusätzlicher Montageschritt für das Einpressen des Faltenbalgendes in die Nut nötig ist.

Der in DE 10 2010 010 137 A1 beschriebene konzentrische Nehmerzylinder besitzt einen Schutzbalg, der sowohl gehäuseseitig als auch ausrücklagerseitig eine Befestigung aufweist. So werden die wulstartigen Enden des Schutzbalges von aus Blech hergestellten Befestigungsringen aufgenommen und mit diesen verklemmt. Ausrücklagerseitig ist dabei ein mit dem Innenring des Ausrücklagers verbundener Befestigungsring vorgesehen, über den ein Energiespeicher mit dem Schutzbalg verbunden ist. Der Befestigungsring weist über seinen Außenumfang verteilt radiale Aufnahmesegmente auf, die im Querschnitt gesehen in etwa eine U-förmige Ausbildung aufweisen. Das wulstförmige Ende des Schutzbalges kommt an der axialen, der Mantelfläche des Befestigungsringes entsprechenden, Anlagefläche sowie an einer ersten radialen Anlagefläche der Aufnahmesegmente zur Anlage. Die andere radiale Anlagefläche (Andrücknase) ist zur ersteren axial versetzt angeordnet und an das mit einer entsprechenden Schräge versehene wulstartige Ende des Schutzbalges andrückbar. Durch das derart mit dem Befestigungsring verklemmte Ende soll der Schutzbalg während der axialen Bewegung des Kolbens am Innenring lagefixiert sein und auch im Ruhezustand seine Lage zu den Bezugsbauteilen beibehalten.

Die Nachteile dieser bekannten Lösung bestehen darin, dass zum einen durch das Festklemmen der Enden des Schutzbalges eine Beweglichkeit in Umfangsrichtung nicht möglich ist, wodurch es zu Verspannungen und damit zu vorzeitigem Verschleiß bzw. zu Beeinträchtigungen der Funktion des Schutzbalges kommen kann. Zum anderen birgt auch diese konstruktive Ausführung des Befestigungsringes im Zusammenwirken mit dem Schutzbalg ein - wenn auch vermindertes - Risiko des Herausrutschens des Endes des Schutzbalges aus der Aufnahme des Befestigungsringes: Die Andrücknasen sind auf der dem Ausrücklager zugewandten Seite des Befestigungsringes angeordnet. In der verklemmten Position sind die an der Schräge des wulstförmigen Endes des Schutzbalges anliegenden Andrücknasen von dem Ausrücklager weg in Richtung des Schutzbalges (zu dessen gehäuseseitigem Ende) geneigt. Bei den axialen Bewegungen des Kolbens/des Energiespeichers und damit auch des Schutzbalges aus seiner Stauch- in seine Streckposition besteht durch den auf das Ende des Schutzbalges wirkenden Zug durchaus auch die Gefahr, dass dieses sich mit der Zeit aus der Aufnahme des Befestigungsringes löst. Ein weiterer Nachteil besteht darin, dass auch hier das Einlegen des Schutzbalges in den Befestigungsring und das anschließende Festklemmen einen zusätzlichen Montageschritt erfordert. Dies geschieht vor der endgültigen Montage, wobei der Schutzbalg mit dem Energiespeicher und dem Befestigungsring eine vormontierte Baugruppe bildet.

Ferner ist sind der DE 10 2010 021788A1 sowie in der DE 10 2009 042822 A1 jeweils ein Nehmerzylinder mit einem Faltenbalg beschrieben.

Als nächstliegender Stand der Technik gemäß dem Oberbegriff des Anspruchs 1 ist die FR 2 909 148 A3 anzusehen. Diese weist ein ringförmiges Teil an einem Lagerinnenring des Nehmerzylinders auf, an dem ein Faltenbalg aufgeschnappt werden kann.

Die Aufgabe der Erfindung besteht darin, die Mängel der bekannten Lösungen zu vermeiden und einen konzentrisch um eine Getriebeeingangswelle angeordneten Nehmerzylinder vorzuschlagen, bei dem ein Schutzbalg ohne aufwändige Montage und bei relativ geringen Herstellungskosten ausrücklagerseitig eine funktionssichere Befestigung aufweist, bei dem insbesondere während der Komprimierung des Schutzbalges dessen Berührung mit dem Ausrücklager verhindert wird.

Diese Aufgabe wird mit den Merkmalen des ersten Patentanspruchs gelöst. Vorteilhafte Ausgestaltungen der Erfindung ergeben sich aus den Unteransprüchen.

Bei einem Nehmerzylinder mit einem konzentrisch um eine Getriebeeingangswelle angeordneten Gehäuse und einem darin axial beweglichen ringförmigen Kolben, der mit einem Ausrücklager in Wirkverbindung steht, und das Ausrücklager mittels eines sich am Gehäuse abstützenden, den Kolben umschließenden Energiespeichers eine axiale Vorspannung erhält, wobei der Energiespeicher von einem Schutzbalg umgeben ist, welcher mit seinem einen Ende am Gehäuse und mit seinem ausrücklagerseitigen Ende von einem mit dem Ausrücklager verbundenen Befestigungsring aufgenommen wird, ist erfindungsgemäß mittels einer axialen Bewegung des Kolbens das ausrücklagerseitige Ende des Schutzbalges in den Befestigungsring einclipsbar.

So ist bei einer Bewegung des Kolbens in seine minimale Endstellung zumindest ein am Außenumfang des Befestigungsringes angeordnetes Rastelement mit einem komplementär ausgebildeten Aufnahmeelement des ausrücklagerseitigen Endes des Schutzbalges in Eingriff bringbar.

Das Rastelement des Befestigungsringes wird hierbei von zumindest einem radial umlaufend angeordneten Kragen und das Aufnahmeelement des Schutzbalges von einer radial umlaufend angeordneten Nut gebildet. Der zumindest eine Kragen des Befestigungsringes ist schräg nach außen zum Ausrücklager hin gerichtet ist und mit der komplementären schräg nach innen gerichteten Nut des Schutzbalges in Eingriff bringbar.

Vorzugsweise wird das Rastelement des Befestigungsringes von mehreren über den Umfang verteilt angeordneten Kragen gebildet.

Außerdem weist der Befestigungsring ausrücklagerseitig zumindest ein radial nach außen gerichtetes, einen Kontakt von Ausrücklager und Schutzbalg verhinderndes, Abschirmelement auf. Das Abschirmelement des Befestigungsringes wird von mehreren über den Umfang verteilt angeordneten radialen Zungen gebildet, die axial beabstandet zu dem Rastelement angeordnet sind. Dabei sind die Zungen und die Kragen in vorteilhafter Weise alternierend an dem Befestigungsring angeordnet.

Vorzugsweise besteht der Befestigungsring aus einem Kunststoffmaterial.

Die Erfindung wird nachstehend anhand eines Ausführungsbeispiels und zugehöriger Zeichnungen näher erläutert. Es zeigen:
- Figur 1: einen erfindungsgemäßen Nehmerzylinder im Teilschnitt bei einer maximalen Endstellung des Kolbens
- Figur 2: ein Detail X nach Figur 1
- Figur 3: eine perspektivische Darstellung eines erfindungsgemäßen Befestigungsringes
- Figur 4: einen Teilschnitt des Befestigungsringes gemäß Figur 3
- Figur 5: einen Teilschnitt des erfindungsgemäßen Nehmerzylinders bei einer Zwischenposition des Kolbens
- Figur 6: einen Teilschnitt des erfindungsgemäßen Nehmerzylinders bei einer minimalen Endstellung des Kolbens

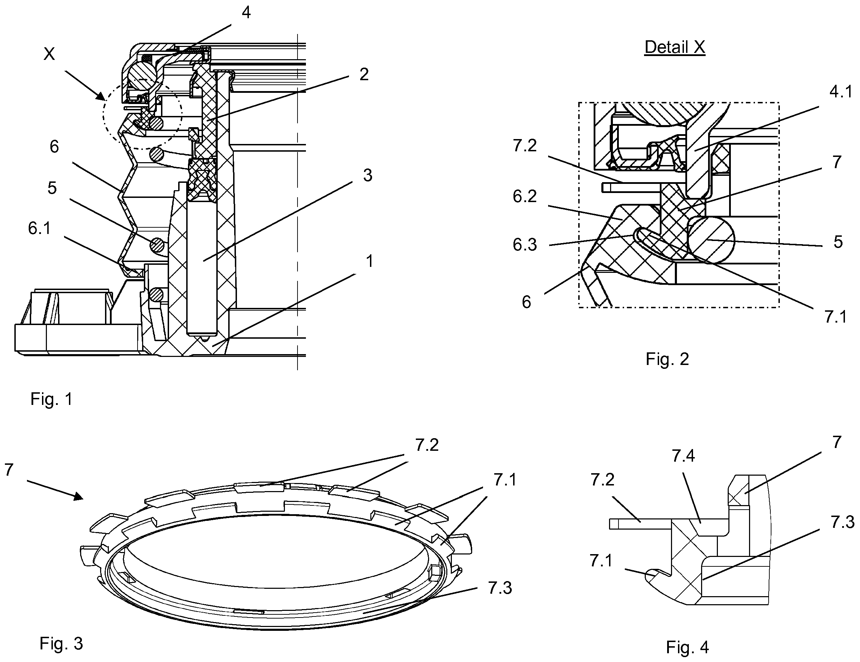

Der in Fig. 1 in einem Teilschnitt dargestellte Nehmerzylinder weist ein hohlzylindrisches Gehäuse 1 auf, welches im Innern eine doppelte Wand bildet. Ein ringförmiger Kolben 2 ist axial beweglich in einem zwischen der inneren und der äußeren Zylinderwand des Gehäuses 1 vorhandenen Zwischenraum angeordnet, in welchem während der Bewegung des Kolbens 2 ein Druckraum 3 entsteht. Es kann die innere Wand des Gehäuses 1 auch von einer Führungshülse gebildet sein, an welcher der ringförmige Kolben 2 entlang gleitet.

Das dem Druckraum 3 gegenüberliegende Ende des Kolbens 2 ist mit einem Ausrücklager 4 verbunden, an dem sich ein den Kolben 2 umgebender, vorgespannter Energiespeicher 5, beispielsweise eine Schraubendruckfeder, abstützt. Zur Abdichtung der Lauf- bzw. Führungsfläche des Kolbens 2 gegen Schmutz wird dieser sowie der Energiespeicher 5 mit einem Schutzbalg 6 umhüllt. Dabei ist das eine Ende 6.1 des Schutzbalges 6 am Gehäuse 1 befestigt und das andere, ausrücklagerseitige Ende 6.2 des Schutzbalges 6 mit einem vorzugsweise aus Kunststoff bestehenden Befestigungsring 7 verbunden. Auf die Befestigung des Schutzbalges 6 am Gehäuse 1 wird hier nicht näher eingegangen, da dies nicht erfindungswesentlich ist.

Der mit dem Lagerinnenring 4.1 des Ausrücklagers 4 verbundene Befestigungsring 7 besitzt einen ring- oder zylinderförmigen Grundkörper, der ein schräg nach radial außen, von dem gehäuseseitigen Ende 6.1 des Schutzbalges 6 weg und zum Ausrücklager 4 hin, gerichtetes Rastelement 7.1 aufweist. Das Rastelement 7.1 wird dabei von zumindest einem Kragen gebildet, der am Außenumfang des Befestigungsringes 7 radial umlaufend angeordnet ist. In der hier gezeigten Ausführung besteht das Rastelement 7.1 aus mehreren über den Umfang verteilt angeordneten Kragen 7.1. Außerdem weist der Befestigungsring 7 ausrücklagerseitig ein nach radial außen gerichtetes Abschirmelement 7.2 auf, das zur Verhinderung eines Kontaktes zwischen Schutzbalg 6 und Ausrücklager 4 dient. Das Abschirmelement 7.2 ist dabei axial beabstandet zu dem/den Kragen 7.1 angeordnet und kann aus zumindest einer radial umlaufend angeordneten Zunge 7.2 oder aus mehreren über den Umfang verteilt vorgesehenen Zungen 7.2 gebildet sein. Dabei sind die Zungen 7.2 vorzugsweise alternierend zu den Kragen 7.1 angeordnet. Außerdem sind an dem Befestigungsring 7 für die Aufnahme der letzten Windung des Energiespeichers 5 eine Innennut 7.3 und zur Verbindung des axialen Schenkels des Lagerinnenrings 4.1 mit dem Befestigungsring 7 eine Aufnahme 7.4 ausgebildet (in Fig. 4 dargestellt).

Während die radialen Zungen 7.2 insbesondere während der Komprimierung des Schutzbalges 6 dessen Berührung mit dem Ausrücklager 4 verhindern sollen, dienen die Kragen 7.1 der Verbindung mit dem wulstartigen Ende 6.2 des Schutzbalges 6. Zur Realisierung der Verbindung mit dem Befestigungsring 7 weist das ausrücklagerseitige wulstartige Ende 6.2 des Schutzbalges 6 ein Aufnahmeelement 6.3 auf, in welches das Rastelement 7.1, d. h. der bzw. die komplementär ausgebildeten Kragen 7.1 des Befestigungsringes 7, einclipsbar ist/sind. Das Aufnahmeelement 6.3 des Schutzbalges 6 wird hierbei von einer schräg nach innen gerichteten, radial umlaufend angeordneten Nut 6.3 gebildet.

In Fig. 1 ist die maximale Ausrückposition des Kolbens 2 und damit auch des Ausrücklagers 4 dargestellt. Dabei weisen auch der Energiespeicher 5 und der Schutzbalg 6 ihre maximale Extension auf. Die Rastelemente bzw. Kragen 7.1 des Befestigungsringes 7 sind in das Aufnahmeelement bzw. die Nut 6.3 des Schutzbalges 6 eingeclipst.

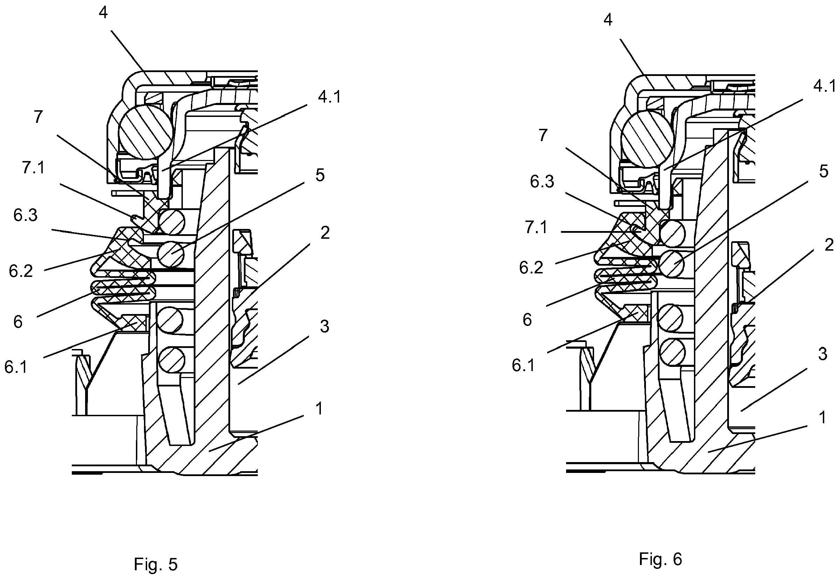

In Fig. 2 ist ein Detail X nach Fig. 1 in vergrößerter Darstellung gezeigt. Die Kragen 7.1 des Befestigungsringes 7 stehen mit der Nut 6.3 des Endes 6.2 des Schutzbalges 6 in Eingriff, wobei der sich - im montierten Zustand - oberhalb der Nut 6.3 befindende Teil des Endes 6.2 des Schutzbalges 6 an einem an den Kragen 7.1 ausgebildeten Hinterschnitt sowie an der axialen Mantelfläche des Grundkörpers des Befestigungsringes 7 anliegt. Durch den nach radial außen gerichteten und zum Ausrücklager 4 hin geneigten Kragen 7.1 des Befestigungsringes 7, der sich mit der komplementären, schräg nach radial innen gerichteten, Nut 6.3 in Eingriff befindet, ist eine Verbindung geschaffen worden, die der axialen Bewegung des Kolbens 2 und damit auch den Dehnungen und Stauchungen des Schutzbalges 6 unbeschadet standhält. Außerdem besteht auf Grund der spielbehafteten Verbindung von Kragen 7.1 und Ende 6.2 eine relativ freie Beweglichkeit in Umfangsrichtung, wodurch Verspannungen und damit Funktionsbeeinträchtigungen des Schutzbalges 6 ausgeschlossen werden können. Die zur Nut 6.3 des Schutzbalges 6 komplementär ausgebildeten Anlageflächen der Kragen 7.1 sind nicht mehr radial, das heißt orthogonal zu der axialen Bewegungsrichtung des Kolbens 2 angeordnet (wie beispielsweise die Anlageflächen des Abschirmringes in der DE 100 80 438 C1). Die Anlageflächen der Kragen 7.1 sind bei der erfindungsgemäßen Ausführung in eine sich zwischen der axialen und der radialen Richtung befindenden Richtung geneigt, welche zum Ausrücklager 4 hin und vom gehäuseseitigen Ende 6.1 des Schutzbalges 6 weg zeigt. Diese Ausrichtung ermöglicht eine vereinfachte Montage des Schutzbalges 6 ohne zusätzliche Montageschritte. Darauf wird bei der Beschreibung der Fig. 5 und Fig. 6 näher eingegangen.

Die Fig. 3 und die Fig. 4 zeigen den erfindungsgemäßen Befestigungsring 7. In Fig. 3 ist der Befestigungsring 7 in einer dreidimensionalen Darstellung und in Fig. 4 in einer Schnittdarstellung zu sehen. An dem Grundkörper sind axial beabstandet und alternierend die Kragen 7.1 und die Zungen 7.2 angeordnet. Außerdem ist die eine Abstützfläche für den Energiespeicher 5 bildende Innennut 7.3 und die eine Verbindung mit dem Lagerinnenring 4.1 herstellende Aufnahme 7.4 angeführt.

Die Fig. 5 und Fig. 6 zeigen Teilschnitte des erfindungsgemäßen Nehmerzylinders mit in unterschiedlichen Positionen befindlichem, hier nur angedeutetem, Kolben 2. Dabei wird ein großer Vorteil der Erfindung verdeutlicht. Die Befestigung des Schutzbalges 6 findet unmittelbar bei der Montage mittels einer ersten Betätigung des Kolbens 2 auf minimale Extension statt, ohne dafür einen zusätzlichen Montageschritt zu benötigen. Das Einclipsen des Endes 6.2 des Schutzbalges 6 mit seiner Nut 6.3 in die Kragen 7.1 des Befestigungsringes 7 erfolgt somit allein durch die axiale Bewegung des Kolbens 2 in seine minimale Endstellung.

So zeigt Fig. 5 den sich in einer Zwischenposition, kurz vor der einer minimalen Extension entsprechenden Endstellung, befindenden Kolben 2. Der Kragen 7.1 des Befestigungsringes 7 und die Nut 6.3 des Schutzbalges 6 stehen noch nicht in Eingriff. Allerdings befinden sich Energiespeicher 5 und Schutzbalg 6 bereits in einer komprimierten Position. Das Ende 6.2 des Schutzbalges 5 berührt schon den Befestigungsring 7.

In Fig. 6 befindet sich der Kolben 2 in seiner der minimalen Extension entsprechenden Endstellung. Der Energiespeicher 5 und der Schutzbalg 6 sind vollständig komprimiert. Durch den Druck der sich an das Ende 6.2 anschließenden Falten des Schutzbalges 6 hat sich dieser auf den Befestigungsring 7 geschoben, wodurch die Kragen 7.1 in die Nut 6.3 eingreifen und somit den Schutzbalg 6 mit dem Befestigungsring 7 verbinden.

Diese Verbindung sichert sowohl in axialer als auch in radialer Richtung eine funktionssichere Befestigung des Schutzbalges 6 ab. Mit der Konstruktion des neuen, aus Kunststoff bestehenden, Befestigungsringes 7 auf der Seite des Ausrücklagers 4 und der entsprechend komplementären Ausführung des Schutzbalges 6 mit seinem Ende 6.2 können bei der Montage des konzentrischen Nehmerzylinders an der Produktionslinie zusätzliche Schritte und Kosten vermieden werden. Die Befestigung mittels Clipsverbindung von Schutzbalg 6 und Befestigungsring 7 erfolgt bei der ersten Betätigung auf Minimal-Extension. Es ist keine Vormontage des Schutzbalges 6 notwendig.

### Bezuaszeichenliste

- a.: Gehäuse
- b.: Kolben
- c.: Druckraum
- d.: Ausrücklager
- 4.1: Lagerinnenring
- 5: Energiespeicher
- 6: Schutzbalg
- 6.1: gehäuseseitiges Ende
- 6.2: ausrücklagerseitiges Ende
- 6.3: Aufnahmeelement/Nut
- 7: Befestigungsring
- 7.1: Rastelement/Kragen
- 7.2: Abschirmelement/Zungen
- 7.3: Innennut
- 7.4: Aufnahme

## Patentansprüche

1. Nehmerzylinder mit einem konzentrisch um eine Getriebeeingangswelle angeordneten Gehäuse (1) und einem darin axial beweglichen ringförmigen Kolben (2), der mit einem Ausrücklager (4) in Wirkverbindung steht, und das Ausrücklager (4) mittels eines sich am Gehäuse (1) abstützenden, den Kolben (2) umschließenden Energiespeichers (5) eine axiale Vorspannung erhält, wobei der Energiespeicher (5) von einem Schutzbalg (6) umgeben ist, welcher mit seinem einen Ende (6.1) am Gehäuse (1) und mit seinem ausrücklagerseitigen Ende (6.2) von einem mit dem Ausrücklager (4) verbundenen Befestigungsring (7) aufgenommen wird, wobei mittels einer axialen Bewegung des Kolbens (2) das ausrücklagerseitige Ende (6.2) des Schutzbalges (6) in den Befestigungsring (7) einclipsbar ist, und der Schutzbalg (6) somit sowohl in axialer als auch in radialer Richtung befestigt ist, wobei bei einer Bewegung des Kolbens (2) in seine minimale Endstellung zumindest ein am Außenumfang des Befestigungsringes (7) angeordnetes Rastelement (7.1) mit einem komplementär ausgebildeten Aufnahmeelement (6.3) des ausrücklagerseitigen Endes (6.2) des Schutzbalges (6) in Eingriff bringbar ist und wobei der Befestigungsring (7) ausrücklagerseitig zumindest ein radial nach außen gerichtetes, einen Kontakt von Ausrücklager (4) und Schutzbalg (6) verhinderndes, Abschirmelement (7.2) aufweist, **dadurch gekennzeichnet, dass** das Abschirmelement (7.2) des Befestigungsringes (7) von mehreren über den Umfang verteilt angeordneten radialen Zungen gebildet wird, die axial beabstandet zu dem Rastelement (7.1) angeordnet sind.

2. Nehmerzylinder nach Anspruch 1, **dadurch gekennzeichnet, dass** das Rastelement (7.1) des Befestigungsringes (7) von zumindest einem radial umlaufend angeordneten Kragen und das Aufnahmeelement (6.3) des Schutzbalges (6) von einer radial umlaufend angeordneten Nut gebildet wird.

3. Nehmerzylinder nach Anspruch 2, **dadurch gekennzeichnet, dass** der zumindest eine Kragen (7.1) des Befestigungsringes (7) schräg nach außen zum Ausrücklager (4) hin gerichtet ist und mit der komplementären schräg nach innen gerichteten Nut (6.3) des Schutzbalges (6) in Eingriff bringbar ist.

4. Nehmerzylinder nach einem der Ansprüche 2 bis 3, **dadurch gekennzeichnet, dass** das Rastelement (7.1) des Befestigungsringes (7) von mehreren über den Umfang verteilt angeordneten Kragen gebildet wird.

5. Nehmerzylinder nach Anspruch 1, **dadurch gekennzeichnet, dass** die Zungen (7.2) und die Kragen (7.1) alternierend an dem Befestigungsring (7) angeordnet sind.

6. Nehmerzylinder nach einem der Ansprüche 1 bis 5, **dadurch gekennzeichnet, dass** der Befestigungsring (7) aus einem Kunststoffmaterial besteht.

## Claims

1. Slave cylinder having a housing (1) which is arranged concentrically about a transmission input shaft, and having an annular piston (2) which is movable axially in said housing and which is operatively connected to a disengagement bearing (4), and the disengagement bearing (4) obtains an axial prestress by means of an energy accumulator (5) which is supported on the housing (1) and which encloses the piston (2), wherein the energy accumulator (5) is surrounded by a protective bellows (6) which is received by one end (6.1) thereof on the housing (1) and by its disengagement bearing-side end (6.2) by a fastening ring (7) connected to the disengagement bearing (4), wherein the disengagement bearing-side end (6.2) of the protective bellows (6) can be clipped into the fastening ring (7) by means of an axial movement of the piston (2), and the protective bellows (6) is thus fastened both in the axial and in the radial direction, wherein, during a movement of the piston (2) into its minimal end position, at least one latching element (7.1) arranged on the outer circumference of the fastening ring (7) can be brought into engagement with a complementarily formed receiving element (6.3) of the disengagement bearing-side end (6.2) of the protective bellows (6), and wherein the fastening ring (7) has, on the disengagement bearing side, at least one radially outwardly directed shielding element (7.2) which prevents contact between disengagement bearing (4) and protective bellows (6), **characterized in that** the shielding element (7.2) of the fastening ring (7) is formed by a plurality of radial tongues which are arranged in a distributed manner over the circumference and which are arranged so as to be axially spaced apart from the latching element (7.1).

2. Slave cylinder according to Claim 1, **characterized in that** the latching element (7.1) of the fastening ring (7) is formed by at least one radially peripherally arranged collar, and the receiving element (6.3) of the protective bellows (6) is formed by a radially peripherally arranged groove.

3. Slave cylinder according to Claim 2, **characterized in that** the at least one collar (7.1) of the fastening ring (7) is directed obliquely outwards towards the disengagement bearing (4) and can be brought into engagement with the complementary obliquely inwardly directed groove (6.3) of the protective bellows (6).

4. Slave cylinder according to either of Claims 2 and 3, **characterized in that** the latching element (7.1) of the fastening ring (7) is formed by a plurality of collars arranged in a distributed manner over the circumference.

5. Slave cylinder according to Claim 1, **characterized in that** the tongues (7.2) and the collars (7.1) are arranged in alternating fashion on the fastening ring (7).

6. Slave cylinder according to one of Claims 1 to 5, **characterized in that** the fastening ring (7) consists of a plastics material.

## Revendications

1. Cylindre récepteur comprenant un boîtier (1) disposé concentriquement autour d'un arbre d'entrée de boîte de vitesses et un piston (2) de forme annulaire, déplaçable axialement dans celui-ci, qui est en liaison fonctionnelle avec un palier de débrayage (4), et le palier de débrayage (4) recevant une précontrainte axiale au moyen d'un accumulateur d'énergie (5) s'appuyant contre le boîtier (1), entourant le piston (2), l'accumulateur d'énergie (5) étant entouré par un soufflet de protection (6) qui est reçu avec l'une de ses extrémités (6.1) au niveau du boîtier (1) et avec son extrémité (6.2) du côté du palier de débrayage par une bague de fixation (7) connectée au palier de débrayage (4), l'extrémité (6.2), du côté du palier de débrayage, du soufflet de protection (6), pouvant être enclipsée dans la bague de fixation (7) au moyen d'un mouvement axial du piston (2), et le soufflet de protection (6) étant ainsi fixé à la fois dans la direction axiale et dans la direction radiale,
au moins un élément d'encliquetage (7.1) disposé au niveau de la périphérie extérieure de la bague de fixation (7) pouvant être amené en prise avec un élément de réception (6.3), réalisé de manière complémentaire, de l'extrémité (6.2), du côté du palier de débrayage, du soufflet de protection (6) dans le cas d'un mouvement du piston (2) dans sa position de fin de course minimale, et la bague de fixation (7) présentant, du côté du palier de débrayage, au moins un élément de protection (7.2) orienté radialement vers l'extérieur, empêchant un contact du palier de débrayage (4) et du soufflet de protection (6), **caractérisé en ce que** l'élément de protection (7.2) de la bague de fixation (7) est formé par plusieurs languettes radiales disposées de manière répartie sur la périphérie, qui sont disposées à distance axiale de l'élément d'encliquetage (7.1).

2. Cylindre récepteur selon la revendication 1, **caractérisé en ce que** l'élément d'encliquetage (7.1) de la bague de fixation (7) est formé par au moins un col disposé radialement sur la périphérie et l'élément de réception (6.3) du soufflet de protection (6) est formé par une rainure disposée radialement sur la périphérie.

3. Cylindre récepteur selon la revendication 2, **caractérisé en ce que** l'au moins un col (7.1) de la bague de fixation (7) est orienté obliquement vers l'extérieur vers le palier de débrayage (4) et peut être amené en prise avec la rainure complémentaire (6.3), orientée obliquement vers l'intérieur, du soufflet de protection (6).

4. Cylindre récepteur selon l'une quelconque des revendications 2 et 3, **caractérisé en ce que** l'élément d'encliquetage (7.1) de la bague de fixation (7) est formé par plusieurs cols disposés de manière répartie sur la périphérie.

5. Cylindre récepteur selon la revendication 1, **caractérisé en ce que** les languettes (7.2) et les cols (7.1) sont disposés en alternance sur la bague de fixation (7).

6. Cylindre récepteur selon l'une quelconque des revendications 1 à 5, **caractérisé en ce que** la bague de fixation (7) se compose d'un matériau en plastique.
